# EUROPÄISCHE PATENTSCHRIFT

(11) **EP 3 325 309 B1**
(45) Veröffentlichungstag und Bekanntmachung des Hinweises auf die Patenterteilung: **09.09.2020**
(21) Anmeldenummer: 16741341.8
(22) Anmeldetag: 22.07.2016
(51) Int. Cl.: B60N 2/02, B60N 2/06

(54) **POSITIONSBESTIMMUNGSVORRICHTUNG ZUM BESTIMMEN EINER POSITION EINES FAHRZEUGSITZES IM INNEREN EINES FAHRZEUGS, SYSTEM, FAHRZEUG MIT EINEM IM INNEREN DES FAHRZEUGS ANGEORDNETEN FAHRZEUGSITZ SOWIE VERFAHREN ZUM BESTIMMEN EINER POSITION EINES FAHRZEUGSITZES**
POSITION-DETERMINING DEVICE FOR DETERMINING A POSITION OF A VEHICLE SEAT INSIDE A VEHICLE, SYSTEM, VEHICLE HAVING A VEHICLE SEAT ARRANGED INSIDE THE VEHICLE, AND METHOD FOR DETERMINING A POSITION OF A VEHICLE SEAT
DISPOSITIF DE DÉTERMINATION DE POSITION SERVANT À DÉTERMINER UNE POSITION D'UN SIÈGE DE VÉHICULE DANS L'HABITACLE D'UN VÉHICULE, VÉHICULE MUNI D'UN SIÈGE DE VÉHICULE AGENCÉ DANS L'HABITACLE DU VÉHICULE, AINSI QUE PROCÉDÉ DE DÉTERMINATION D'UNE POSITION D'UN SIÈGE DE VÉHICULE

(30) Priorität: 23.07.2015 DE 102015213891
(43) Veröffentlichungstag der Anmeldung: 30.05.2018
(73) Patentinhaber: Volkswagen Aktiengesellschaft, 38440 Wolfsburg (DE)
(72) Erfinder: ESSLINGER, Daniel, 38110 Braunschweig (DE); WINKLER, Jörg, 38259 Salzgitter (DE); BORK, Simon, 38547 Calberlah OT Edesbüttel (DE)
(86) Internationale Anmeldenummer: PCT/EP2016/067525
(87) Internationale Veröffentlichungsnummer: WO 2017/013245

(56) Entgegenhaltungen:
- DE-A1- 4 236 340
- DE-A1-102004 050 759
- DE-B4- 10 164 068

## Beschreibung

Die vorliegende Erfindung betrifft eine Positionsbestimmungsvorrichtung zum Bestimmen einer Position eines Fahrzeugsitzes im Inneren eines Fahrzeugs, wobei die Position des Fahrzeugsitzes im Fahrzeug entlang einer Verstellrichtung zwischen einem ersten und zumindest einem zweiten Ort einstellbar ist, aufweisend eine Fahrzeugkomponente und eine Fahrzeugsitzkomponente, wobei die Fahrzeugkomponente als Teil einer Fahrzeugelektronik ortsfest im Fahrzeug und die Fahrzeugsitzkomponente als Teil einer Fahrzeugsitzelektronik ortsfest im Fahrzeugsitz anordenbar ist, die Fahrzeugsitzkomponente aufweisend zumindest eine Fahrzeugsitz-Sende/Empfangsvorrichtung und die Fahrzeugkomponente aufweisend zumindest zwei Fahrzeug-Sende/Empfangsvorrichtungen. Ferner betrifft die Erfindung ein System, aufweisend eine Positionsbestimmungsvorrichtung und eine Verarbeitungsvorrichtung, ein Fahrzeug mit einem im Inneren des Fahrzeugs angeordneten Fahrzeugsitz, wobei eine Position des Fahrzeugsitzes entlang einer Verstellrichtung zwischen einem ersten und zumindest einem zweiten Ort einstellbar ist, aufweisend eine Positionsbestimmungsvorrichtung zum Bestimmen der Position des Fahrzeugsitzes im Inneren eines Fahrzeugs sowie ein Verfahren zum Bestimmen einer Position eines Fahrzeugsitzes im Inneren eines Fahrzeugs, wobei der Fahrzeugsitz entlang einer Verstellrichtung zwischen einem ersten und zumindest einem zweiten Ort einstellbar ist, unter Verwendung einer Positionsbestimmungsvorrichtung.

Bei modernen Fahrzeugen ist es bekannt, Information und/oder Energie zwischen einer Fahrzeugelektronik und einer Fahrzeugsitzelektronik zu übertragen. Insbesondere können dabei kontaktlose Übertragungsvorrichtungen verwendet werden, siehe beispielsweise die DE 10 2004 050 759 A1 oder die DE 101 64 068 B4. Darüber hinaus ist es bekannt, Fahrzeugsitze derart verstellbar auszubilden, dass sie beispielsweise auf verschiedene Benutzer anpassbar sind. Insbesondere können dabei die Fahrzeugsitze entlang einer Verstellrichtung linear im Inneren des Fahrzeugs verschoben werden. Auch können, insbesondere in variablen Fahrzeugen, wie beispielsweise Vans, Fahrzeugsitze auch ausbaubar ausgestaltet sein. Dabei ist es von Vorteil, eine Position des Fahrzeugsitzes, insbesondere einen Ort entlang der Verstellrichtung, zu ermitteln. Da die Position des Fahrzeugsitzes einen Rückschluss, beispielsweise auf eine Größe des Benutzers, ermöglichen kann, können insbesondere durch Sicherheitsvorrichtungen, wie zum Beispiel Gurtstraffer und/oder Airbags, durch ein an eine Position des Fahrzeugsitzes angepasstes Auslösen für einen Benutzer des Fahrzeugsitzes eine besonders große Sicherheit bereitstellen. Dabei können auch weitere Größen des Benutzers, beispielsweise sein Gewicht, durch Sensoren bestimmt werden und als Information den Sicherheitsvorrichtungen bereitgestellt werden. Gemäß dem Stand der Technik ist es bekannt, diese Position des Fahrzeugsitzes durch zusätzliche externe Sensoren zu ermitteln, siehe ebenfalls beispielsweise die DE 10 2004 050 759 A1 oder die DE 101 64 068 B4. Diese Sensoren stellen zusätzliche Bauelemente dar, die mit Energie versorgt werden müssen und insgesamt eine Komplexität eines Fahrzeugsitzes und/oder eines Fahrzeugs erhöhen.

Es ist daher Aufgabe der vorliegenden Erfindung, die voranstehend beschriebenen Nachteile zumindest teilweise zu beheben. Insbesondere ist es Aufgabe der Erfindung, eine Positionsbestimmungsvorrichtung, ein System, ein Fahrzeug sowie ein Verfahren zum Bestimmen einer Position eines Fahrzeugsitzes zu schaffen, die in besonders einfacher und kostengünstiger Weise eine Positionsbestimmung eines Fahrzeugsitzes im Inneren eines Fahrzeugs verbessern, wodurch insbesondere auch eine Komplexität einer Fahrzeug- und/oder Fahrzeugsitzelektronik verringert werden kann.

Voranstehende Aufgabe wird gelöst durch eine Positionsbestimmungsvorrichtung zum Bestimmen einer Position eines Fahrzeugsitzes im Inneren eines Fahrzeugs mit den Merkmalen des unabhängigen Anspruchs 1. Ferner wird die Aufgabe gelöst durch ein System mit den Merkmalen des nebengeordneten Anspruchs 9, durch ein Fahrzeug mit den Merkmalen des nebengeordneten Anspruchs 11 sowie durch ein Verfahren mit den Merkmalen des nebengeordneten Anspruchs 12. Weitere Merkmale und Details der Erfindung ergeben sich aus den Unteransprüchen, der Beschreibung und den Zeichnungen. Dabei gelten Merkmale und Details, die im Zusammenhang mit der erfindungsgemäßen Positionsbestimmungsvorrichtung beschrieben sind, selbstverständlich auch im Zusammenhang mit dem erfindungsgemäßen System, dem erfindungsgemäßen Fahrzeug sowie dem erfindungsgemäßen Verfahren und jeweils umgekehrt, so dass bezüglich der Offenbarung zu den einzelnen Erfindungsaspekten stets wechselseitig Bezug genommen wird bzw. werden kann.

Gemäß einem ersten Aspekt der Erfindung wird die Aufgabe gelöst durch eine Positionsbestimmungsvorrichtung zum Bestimmen einer Position eines Fahrzeugsitzes im Inneren eines Fahrzeugs, wobei die Position des Fahrzeugsitzes im Fahrzeug entlang einer Verstellrichtung zwischen einem ersten und zumindest einem zweiten Ort einstellbar ist, aufweisend eine Fahrzeugkomponente und eine Fahrzeugsitzkomponente, wobei die Fahrzeugkomponente als Teil einer Fahrzeugelektronik ortsfest im Fahrzeug und die Fahrzeugsitzkomponente als Teil einer Fahrzeugsitzelektronik ortsfest im Fahrzeugsitz anordenbar ist, die Fahrzeugsitzkomponente aufweisend zumindest eine Fahrzeugsitz-Sende/Empfangsvorrichtung und die Fahrzeugkomponente aufweisend zumindest zwei Fahrzeug-Sende/Empfangsvorrichtungen. Eine erfindungsgemäße Positionsbestimmungsvorrichtung ist dadurch gekennzeichnet, dass zwischen der zumindest einen Fahrzeugsitz-Sende/Empfangsvorrichtung und jeweils einer der Fahrzeug-Sende/Empfangsvorrichtungen ein kontaktloses Übertragen von Information und/oder Energie durchführbar ist und wobei ferner die zumindest zwei Fahrzeug-Sende/Empfangsvorrichtungen versetzt zueinander entlang der Verstellrichtung angeordnet sind.

Durch eine erfindungsgemäße Positionsbestimmungsvorrichtung kann eine Position eines Fahrzeugsitzes im Inneren eines Fahrzeuges bestimmt werden. Als Position gemäß der Erfindung wird dabei insbesondere ein Ort entlang einer Verstellrichtung verstanden, an dem sich der Fahrzeugsitz befindet. Der Fahrzeugsitz kann dabei beispielsweise durch Schienen gehalten sein, wobei ein lineares Verstellen des Fahrzeugsitzes entlang der Schienen zwischen zumindest zwei Orten ermöglicht ist und somit die Schienen die Verstellrichtung vorgeben. Das Verstellen kann dabei in diskreten, fest einstellbaren Schritten und/oder kontinuierlich erfolgen. Darüber hinaus kann der Fahrzeugsitz auch ausbaubar sein. Ferne kann, insbesondere bei einem derartigen ausbaubaren Fahrzeugsitz, auch eine Orientierung beziehungsweise eine Einbaurichtung des Fahrzeugsitzes, insbesondere in Bezug auf die Verstellrichtung, im Sinne der Erfindung eine Position des Fahrzeugsitzes darstellen. Selbstverständlich kann, soweit technisch sinnvoll und möglich, anstatt eines Fahrzeugsitzes auch eine Position eines anderen Bauteils des Fahrzeugs bestimmt werden, dessen Position entlang einer Verstellrichtung einstellbar ist. Ein Fahrzeug im Sinne der Erfindung ist dabei bevorzugt ein Personenkraftwagen, kann aber selbstverständlich auch ein Schiff, Flugzeug oder jedes andere Fahrzeug mit einem entlang einer Verstellrichtung einstellbaren Bauteil sein. Die Positionsbestimmungsvorrichtung weist dabei insbesondere eine Fahrzeugkomponente auf, die derart ausgebildet ist, dass sie einen Teil einer Fahrzeugelektronik bilden kann, insbesondere dass sie in die Fahrzeugelektronik integriert werden kann. Ferner weist die Positionsbestimmungsvorrichtung eine Fahrzeugsitzkomponente auf, die entsprechend einen Teil einer Fahrzeugsitzelektronik bilden, insbesondere in die Fahrzeugsitzelektronik integriert werden kann. Dadurch kann eine Einbindung der jeweiligen Komponente in die jeweilige Elektronik, sowohl im Fahrzeug als auch im Fahrzeugsitz, besonders einfach sichergestellt werden. Für eine Übertragung von Information und/oder Energie sind Sende/Empfangsvorrichtungen vorgesehen. Dabei weist die Fahrzeugsitzkomponente zumindest eine Fahrzeugsitz-Sende/Empfangsvorrichtung und die Fahrzeugkomponente zumindest zwei Fahrzeug-Sende/Empfangsvorrichtung auf. Die Übertragung kann dabei in beide Richtungen erfolgen, sowohl vom Fahrzeug zum Fahrzeugsitz als auch umgekehrt. Informationen können dabei beispielsweise Sensordaten, Auslöse- und/oder Steuersignale umfassen. Als Energie wird selbstverständlich bevorzugt eine elektrische Energie übertragen.

Erfindungsgemäß ist vorgesehen, dass die jeweiligen Sende/Empfangsvorrichtungen zum kontaktlosen Übertragen von Information und/oder Energie ausgebildet sind. Dabei kann das Übertragen beispielsweise induktiv und/oder kapazitiv erfolgen. Bei einer induktiven Übertragung können dabei die Sende/Empfangsvorrichtungen beispielsweise Koppelspulen aufweisen. Erfindungsgemäß ist insbesondere für ein Übertragen von Information und/oder zwischen der Fahrzeugelektronik und der Fahrzeugsitzelektronik Energie eine Übertragung zwischen der zumindest einen Fahrzeugsitz-Sende/Empfangsvorrichtung und bereits zumindest einer der Fahrzeug-Sende/Empfangsvorrichtungen ausreichend. Erfindungswesentlich ist vorgesehen, dass die zumindest zwei Fahrzeug-Sende/Empfangsvorrichtungen versetzt zueinander entlang der Verstellrichtung anordenbar sind. Als Teil der Fahrzeugkomponente der Positionsbestimmungsvorrichtung sind die Fahrzeug-Sende/Empfangsvorrichtungen dadurch im eingebauten Zustand entlang der Verstellrichtung des Fahrzeugsitzes ortsfest im Fahrzeug angeordnet. Die zumindest eine Fahrzeugsitz-Sende/Empfangsvorrichtung ist als Teil der Fahrzeugsitzkomponente ortsfest im Fahrzeugsitz angeordnet. Die Anordnungsorte der jeweiligen Sende/Empfangsvorrichtungen sind dabei sowohl im Fahrzeug als auch im Fahrzeugsitz bekannt. Bei einer Verstellung des Fahrzeugsitzes ändern sich daher automatisch auch die Abstände der einzelnen Fahrzeug-Sende/Empfangsvorrichtungen zur zumindest einen Fahrzeugsitz-Sende/Empfangsvorrichtung. Eine Stärke und/oder Qualität einer Übertragung zwischen den Sende/Empfangsvorrichtungen ist jedoch von diesem Abstand direkt abhängig, wobei mit zunehmendem Abstand eine Stärke und/oder Qualität der Übertragung abnimmt. Durch einen Aufbau einer Übertragung zwischen jeder der zumindest zwei Fahrzeug-Sende/Empfangsvorrichtungen und der zumindest einen Fahrzeugsitz-Sende/Empfangsvorrichtung kann die jeweilige Stärke und/oder Qualität der jeweiligen Übertragung ermittelt werden, wobei aus dieser Stärke und/oder Qualität der Übertragung auf eine Entfernung der jeweiligen Fahrzeug-Sende/Empfangsvorrichtung von der zumindest einen Fahrzeugsitz-Sende/Empfangsvorrichtung geschlossen werden kann. Durch eine Fahrzeugsitzkomponente mit mehr als einer Fahrzeugsitz-Sende/Empfangsvorrichtung kann dabei beispielsweise eine Genauigkeit der Positionsbestimmung, insbesondere hinsichtlich einer Orientierung beziehungsweise Einbaurichtung des Fahrzeugsitzes, erhöht werden. Bevorzugt können dabei zwei Fahrzeugsitz-Sende/Empfangsvorrichtungen vorgesehen sein, die beispielsweise bezüglich der Verstellrichtung auf verschiedenen Seiten des Fahrzeugsitzes angeordnet sind. Dabei kann ferner selbstverständlich dann, wenn zwischen keiner der Fahrzeug-Sende/Empfangsvorrichtungen und der zumindest einen Fahrzeugsitz-Sende/Empfangsvorrichtung eine Übertragung aufgebaut werden kann, beispielsweise auch darauf geschlossen werden, dass der Fahrzeugsitz aus dem Fahrzeug ausgebaut worden ist. Auf diese Weise kann somit ermöglicht werden, unter Verwendung lediglich der Sende/Empfangsvorrichtungen eine Position der zumindest einen Fahrzeugsitz-Sende/Empfangsvorrichtung relativ zu den Fahrzeug-Sende/Empfangsvorrichtungen und damit eine Position des Fahrzeugsitzes im Inneren des Fahrzeugs besonders einfach zu ermitteln. Als Position kann dabei, wie oben bereits ausgeführt, sowohl ein Ort als auch eine Orientierung des Fahrzeugsitzes im Fahrzeug ermittelt werden. Ein Einsatz von zusätzlichen, externen Sensoren kann dadurch vermieden werden, wodurch insbesondere eine Komplexität einer Elektronik, sowohl einer Fahrzeugelektronik als auch einer Fahrzeugsitzelektronik, verringert werden kann.

Bevorzugt kann ferner bei einer erfindungsgemäßen Positionsbestimmungsvorrichtung vorgesehen sein, dass die Fahrzeugkomponente und/oder die Fahrzeugsitzkomponente eine Auswerteeinheit zur Bestimmung der Position des Fahrzeugsitzes aufweist. Eine derartige Auswerteeinheit ist dabei insbesondere zum Auswerten der Aufbauvorgänge einer Übertragung der einzelnen Fahrzeug-Sende/Empfangsvorrichtungen zur Fahrzeugsitz-Sende/Empfangsvorrichtung ausgebildet. Dadurch ist es in der Auswerteeinheit möglich, die Stärken und/oder Qualitäten der einzelnen Übertragungen zu ermitteln und auszuwerten. Ein Bestimmen einer Position des Fahrzeugsitzes kann somit bereits in der Auswerteeinheit ermöglicht werden. Ein Auswerten und Bestimmen der Position in der restlichen, im Fahrzeug und/oder im Fahrzeugsitz bereits vorhandenen, Elektronik, kann dadurch vermieden werden. Eine weitere Reduzierung der Komplexität der Fahrzeug- und/oder Fahrzeugsitzelektronik kann dadurch erreicht werden.

Besonders bevorzugt kann eine erfindungsgemäße Positionsbestimmungsvorrichtung dahingehend ausgebildet sein, dass die Fahrzeug-Sende/Empfangsvorrichtungen identisch oder zumindest im Wesentlichen identisch ausgebildet sind. Identisch oder zumindest im Wesentlichen identisch ausgebildet bedeutet dabei gemäß der Erfindung insbesondere, dass diese zumindest in den Bauteilen, die an der Übertragung von Information und/oder Energie, beispielsweise insbesondere die Fahrzeug-Sende/Empfangsvorrichtungen, gleich oder zumindest im Wesentlichen gleich aufgebaut sind. Durch eine identische oder zumindest im Wesentlichen identische Ausbildung der Fahrzeug-Sende/Empfangsvorrichtungen können insbesondere Zeit und Kosten bei der Herstellung der Fahrzeug-Sende/Empfangsvorrichtungen eingespart werden. Auch beispielsweise eine Auswertung der Aufbauvorgänge zwischen den einzelnen Fahrzeug-Sende/Empfangsvorrichtungen und der Fahrzeugsitz-Sende/Empfangsvorrichtung kann dadurch erleichtert werden. Selbstverständlich kann auch bei einer Fahrzeugsitzkomponente mit mehreren Fahrzeugsitz-Sende/Empfangsvorrichtungen vorgehsehen sein, dass diese Fahrzeugsitz-Sende/Empfangsvorrichtungen identisch oder zumindest im Wesentlichen identisch ausgebildet sind, wodurch entsprechend dieselben Vorteile erzielt werden können.

Darüber hinaus kann bei einer erfindungsgemäßen Positionsbestimmungsvorrichtung ferner vorgesehen sein, dass eine Anzahl und/oder eine Anordnung der Fahrzeug-Sende/Empfangsvorrichtungen den einstellbaren Positionen des Fahrzeugsitzes anpassbar ist/sind. Diese Anpassungen können dabei insbesondere bevorzugt vor einem Einbau der erfindungsgemäßen Positionsbestimmungsvorrichtung in das Fahrzeug erfolgen. So kann es zum Beispiel sinnvoll sein, bei einem kleinen Verstellweg des Fahrzeugsitzes entlang der Verstellrichtung eine kleinere Anzahl an Fahrzeug-Sende/Empfangsvorrichtungen vorzusehen, als bei einem größeren Verstellweg. Kosten, sowohl bei der Herstellung einer erfindungsgemäßen Positionsbestimmungsvorrichtung, als auch bei einer Montage derselben, können dadurch eingespart werden. Durch eine entsprechende Anordnung der Fahrzeug-Sende/Empfangsvorrichtungen, beispielsweise derart, dass der gesamte Verstellweg des Fahrzeugsitzes derart durch Fahrzeug-Sende/Empfangsvorrichtungen abgedeckt ist, dass für jede einstellbare Position des Fahrzeugsitzes eine Übertragung von Information und/oder Energie zwischen der Fahrzeugelektronik und der Fahrzeugsitzelektronik möglich ist, kann insbesondere auch eine Genauigkeit bei der Bestimmung der Position des Fahrzeugsitzes erhöht werden.

Gemäß einer bevorzugten Weiterentwicklung kann eine erfindungsgemäße Positionsbestimmungsvorrichtung derart ausgebildet sein, dass die Anzahl und die Anordnung der Fahrzeug-Sende/Empfangsvorrichtungen einer Anzahl und Orten von fest einstellbaren Positionen des Fahrzeugsitzes anpassbar sind. Diese Weiterentwicklung einer erfindungsgemäßen Positionsbestimmungsvorrichtung ist insbesondere für Fahrzeugsitze von Vorteil, die entlang der Verstellrichtung in fest einstellbaren, diskreten Positionen anordenbar sind. Insbesondere können beispielsweise Schienen, in denen der Fahrzeugsitz entlang der Verstellrichtung verstellbar ist, Verrastmöglichkeiten aufweisen, die insbesondere auch in konstanten Abständen angeordnet sind. Durch derartige Verrastmöglichkeiten kann der Fahrzeugsitz in fest einstellbaren Positionen angeordnet werden. Erfindungsgemäß kann vorgesehen sein, dass die Anzahl und die Anordnung der Fahrzeug-Sende/Empfangsvorrichtungen dieser Anzahl und diesen Orten der fest einstellbaren Positionen des Fahrzeugsitzes anpassbar sind. Dabei kann anpassbar gemäß der Erfindung insbesondere bedeuten, dass zum einen die Anzahl der Fahrzeug-Sende/Empfangsvorrichtungen der Anzahl der möglichen Positionen des Fahrzeugsitzes entspricht und zum anderen, dass die jeweiligen Fahrzeug-Sende/Empfangsvorrichtungen derart angeordnet sind, dass in jeder Position des Fahrzeugsitzes genau eine Fahrzeug-Sende/Empfangsvorrichtung möglichst nahe der zumindest einen Fahrzeugsitz-Sende/Empfangsvorrichtung ist. Die Fahrzeug-Sende/Empfangsvorrichtungen sind dabei zumeist entlang der Verstellrichtung auch voneinander beabstandet angeordnet. Dadurch kann sichergestellt werden, dass eine Übertragung von Information und/oder Energie zwischen dieser Fahrzeug-Sende/Empfangsvorrichtung und der zumindest einen Fahrzeugsitz-Sende/Empfangsvorrichtung eine, insbesondere im Vergleich zu allen anderen Fahrzeug-Sende/Empfangsvorrichtungen, besonders gute Stärke und/oder Qualität aufweist, wodurch folglich auch eine besonders sichere Bestimmung der Position des Fahrzeugsitzes erfolgen kann.

In einer alternativen Weiterentwicklung einer erfindungsgemäßen Positionsbestimmungsvorrichtung kann ferner vorgesehen sein, dass die Fahrzeug-Sende/Empfangsvorrichtungen derart anordenbar sind, dass sie entlang der Verstellrichtung überlappen und dass eine Anzahl der Fahrzeug-Sende/Empfangsvorrichtungen derart wählbar ist, dass für alle möglichen Positionen des Fahrzeugsitzes zwischen zumindest einer der Fahrzeug-Sende/Empfangsvorrichtungen und der zumindest einen Fahrzeugsitz-Sende/Empfangsvorrichtung ein kontaktloses Übertragen von Information und/oder Energie durchführbar ist. Diese Weiterentwicklung einer erfindungsgemäßen Positionsbestimmungsvorrichtung ist insbesondere für Fahrzeugsitze von Vorteil, die entlang der Verstellrichtung kontinuierlich in Positionen anordenbar sind. Durch diese Wahl einer Anzahl der Fahrzeug-Sende/Empfangsvorrichtungen kann insbesondere sichergestellt werden, dass die zumindest eine Fahrzeugsitz-Sende/Empfangsvorrichtung im Fahrzeugsitz in jeder Position des Fahrzeugsitzes mit zumindest einer der Fahrzeug-Sende/Empfangsvorrichtungen eine Übertragung aufbauen kann. Eine Übertragung von Information und/oder Energie kann somit für jede Position des Fahrzeugsitzes sichergestellt werden. Durch das Überlappen kann ferner eine Genauigkeit bei der Bestimmung der Position des Fahrzeugsitzes gesteigert werden. Dies kann dadurch begründet werden, da für jede Position des Fahrzeugsitzes mehrere Fahrzeug-Sende/Empfangsvorrichtungen mit der Fahrzeugsitz-Sende/Empfangsvorrichtung eine Übertragung aufbauen können, wobei jede der Übertragungen eine von der Entfernung der jeweiligen Fahrzeug-Sende/Empfangsvorrichtung von der zumindest einen Fahrzeugsitz-Sende/Empfangsvorrichtung abhängige Stärke und/oder Qualität aufweist. Durch einen Vergleich der Stärke und/oder der Qualität der einzelnen Übertragungen kann folglich die Position der zumindest einen Fahrzeugsitz-Sende/Empfangsvorrichtung und damit die Position des gesamten Fahrzeugsitzes bestimmt werden, insbesondere auch bei einer kontinuierlichen Verstellbarkeit des Fahrzeugsitzes entlang der Verstellrichtung.

Ferner kann eine erfindungsgemäße Positionsbestimmungsvorrichtung dahingehend ausgebildet sein, dass die zumindest eine Fahrzeugsitz-Sende/Empfangsvorrichtung ein gedämpftes elektronisches Element, insbesondere einen gedämpften elektronischen Schwingkreis, aufweist. Kann zwischen keiner der Fahrzeug-Sende/Empfangsvorrichtungen und der zumindest einen Fahrzeugsitz-Sende/Empfangsvorrichtung eine Übertragung aufgebaut werden, kann normalerweise auf einen Ausbau des Fahrzeugsitzes geschlossen werden. Durch ein gedämpftes elektronisches Element, insbesondere einen gedämpften elektronischen Schwingkreis, wird jedoch bei einem Aufbau einer Übertragung, die von einer Fahrzeug-Sende/Empfangsvorrichtung ausgeht, auch dann Energie aufgenommen, wenn die zumindest eine Fahrzeugsitz-Sende/Empfangsvorrichtung defekt ist und eine Übertragung daher nicht aufgebaut werden kann. Dadurch kann es somit ermöglicht werden, eine defekte Fahrzeugsitz-Sende/Empfangsvorrichtung zu detektieren und insbesondere kann ein fehlerhaftes Erkennen eines Ausbaus des Fahrzeugsitzes vermieden werden. Alternativ und/oder zusätzlich kann die Fahrzeugsitzkomponente auch zum Erzeugen und Übertragen eines Zustandssignals ausgebildet sein. Ein derartiges Zustandssignal kann dabei beispielsweise ein Bitmuster umfassen. Durch ein derartiges Zustandssignal kann, insbesondere bei einer störungsfrei funktionierenden Fahrzeugsitz-Sende/Empfangsvorrichtung, angezeigt werden, dass die Fahrzeugkomponente einwandfrei funktioniert.

Auch kann bei einer erfindungsgemäßen Positionsbestimmungsvorrichtung ferner vorgesehen sein, dass die Fahrzeugsitz-Sende-Empfangsvorrichtung in Richtung der Verstellrichtung eine derartige Längserstreckung aufweist, dass sie wenigstens zwei der Fahrzeug-Sende-Empfangsvorrichtungen zumindest teilweise überdeckt. Bevorzugt wird dabei eine Fahrzeug-Sende/Empfangsvorrichtung zu jeder Zeit vollständig von der Fahrzeugsitz-Sende-Empfangsvorrichtung überdeckt und die zumindest eine zweite Fahrzeug-Sende/Empfangsvorrichtung teilweise überdeckt. Dabei kann die vollständig überdeckte Fahrzeug-Sende-Empfangsvorrichtung bevorzugt zur Übertragung von Information und/oder Energie genutzt werden. Die teilweise überdeckte Fahrzeug-Sende-Empfangsvorrichtung kann insbesondere bereits darauf vorbereitet werden, beispielsweise bei einer Bewegung des Fahrzeugsitzes in die Richtung der teilweise überdeckten Fahrzeug-Sende-Empfangsvorrichtung, diese Übertragungsfunktionalität zu übernehmen. Auch ein grundsätzliches Erkennen einer Bewegung des Fahrzeugsitzes kann durch eine derartige Ausgestaltung einer erfindungsgemäßen Fahrzeugsitz-Sende/Empfangsvorrichtung verbessert und erleichtert werden. Eine Verbesserung einer Robustheit der erfindungsgemäßen Positionsbestimmungsvorrichtung und insbesondere eine Erhöhung einer Systemgeschwindigkeit, mit der beispielsweise ein Umschalten zwischen den jeweils verwendeten Fahrzeug-Sende-Empfangsvorrichtungen durchgeführt werden kann, kann somit insgesamt bereitgestellt werden.

Gemäß einem zweiten Aspekt der Erfindung wird die Aufgabe gelöst durch ein System, aufweisend eine Positionsbestimmungsvorrichtung gemäß dem ersten Aspekt der Erfindung und eine Verarbeitungsvorrichtung. Die Verarbeitungsvorrichtung ist zum Verarbeiten der durch die Positionsbestimmungsvorrichtung bestimmten Position des Fahrzeugsitzes ausgebildet. Die im System eingesetzte Positionsbestimmungsvorrichtung ist gemäß dem ersten Aspekt der Erfindung ausgebildet. Dementsprechend bringt ein erfindungsgemäßes System die gleichen Vorteile mit sich, wie sie ausführlich mit Bezug auf eine erfindungsgemäße Positionsbestimmungsvorrichtung gemäß dem ersten Aspekt der Erfindung erläutert worden sind. Ferner weist ein erfindungsgemäßes System eine Verarbeitungsvorrichtung auf. Diese Verarbeitungsvorrichtung ist insbesondere zum Verarbeiten einer Position eines Fahrzeugsitzes ausgebildet, die durch eine erfindungsgemäße Positionsbestimmungsvorrichtung gemäß dem ersten Aspekt der Erfindung bestimmt worden ist. Dadurch kann es besonders einfach ermöglicht werden, die Positionsinformation für Funktionen im Fahrzeug zu verwenden.

Ferner kann bei einem erfindungsgemäßen System vorgesehen sein, dass die Verarbeitungsvorrichtung ein Sicherheitssystem des Fahrzeugs ist. Ein derartiges Sicherheitssystem kann dabei beispielsweise ein Rückhaltemittel, wie ein Gurt, und/oder ein Airbag sein. Durch eine Ausgestaltung einer Verarbeitungsvorrichtung als ein Sicherheitssystem kann insbesondere ermöglicht werden, die Funktionalität des Sicherheitssystems, in Abhängigkeit einer Position des Fahrzeugsitzes, bereitzustellen. So kann insbesondere von einer Position des Fahrzeugsitzes auf eine Größe des Benutzers des Fahrzeugsitzes geschlossen werden, wodurch wiederum ein adaptives Auslösen eines Rückhaltemittels, beispielsweise eines Gurtkraftbegrenzers, angepasst an den Benutzer ermöglicht werden kann. Auch können beispielsweise Auslösezeiten von Airbags an eine Position des Fahrzeugsitzes angepasst werden, wodurch insbesondere eine Sicherheit des Benutzers gesteigert werden kann. Alternativ oder zusätzlich können durch das Sicherheitssystem auch Informationen und Daten von weiteren Sensoren berücksichtigt werden. So kann beispielsweise durch einen Gewichtssensor ebenfalls eine Information über einen Benutzer, insbesondere über das Gewicht des Benutzers beziehungsweise über eine Sitzbelegung, erfasst werden, die zur Anpassung eines adaptiven Auslösens des Rückhaltemittels ausgewertet werden kann. Auch eine Stellung einer Lehne des Fahrzeugsitzes und/oder ein Gurtstatus, insbesondere beispielsweise eine Information, ob der Gurt gestreckt oder nicht gestreckt ist, können im Sicherheitssystem zur Anpassung eines adaptiven Auslösens des Rückhaltemittels ausgewertet werden.

Gemäß einem dritten Aspekt der Erfindung wird die Aufgabe ferner durch ein Fahrzeug mit einem im Inneren des Fahrzeugs angeordneten Fahrzeugsitz gelöst, wobei eine Position des Fahrzeugsitzes entlang einer Verstellrichtung zwischen einem ersten und zumindest einem zweiten Ort einstellbar ist, aufweisend eine Positionsbestimmungsvorrichtung zum Bestimmen der Position des Fahrzeugsitzes im Inneren eines Fahrzeugs. Ein erfindungsgemäßes Fahrzeug ist dadurch gekennzeichnet, dass die Positionsbestimmungsvorrichtung gemäß dem ersten Aspekt der Erfindung ausgebildet ist und/oder dass das Fahrzeug ein System gemäß dem zweiten Aspekt der Erfindung aufweist. In letzteren Fall weist das Fahrzeug entsprechend eine Positionsbestimmungsvorrichtung gemäß dem ersten Aspekt der Erfindung auf. Dementsprechend bringt ein erfindungsgemäßes Fahrzeug die gleichen Vorteile mit sich, wie sie ausführlich mit Bezug auf eine erfindungsgemäße Positionsbestimmungsvorrichtung gemäß dem ersten Aspekt der Erfindung bzw. mit Bezug auf ein erfindungsgemäßes System gemäß dem zweiten Aspekt der Erfindung erläutert worden sind.

Gemäß einem vierten Aspekt der Erfindung wird die Aufgabe ferner gelöst durch ein Verfahren zum Bestimmen einer Position eines Fahrzeugsitzes im Inneren eines Fahrzeugs, wobei der Fahrzeugsitz entlang einer Verstellrichtung zwischen einem ersten und zumindest einem zweiten Ort einstellbar ist, unter Verwendung einer Positionsbestimmungsvorrichtung gemäß dem ersten Aspekt der Erfindung. Ein erfindungsgemäßes Verfahren ist durch folgende Schritte gekennzeichnet:
a) Aufbauen einer Übertragung zwischen jeder der zumindest zwei Fahrzeug-Sende/Empfangsvorrichtungen mit der zumindest einen Fahrzeugsitz-Sende/Empfangsvorrichtung,
b) Erkennen zumindest der Fahrzeug-Sende/Empfangsvorrichtung und der Fahrzeugsitz-Sende/Empfangsvorrichtung (11) mit der besten Übertragung, und
c) Ermittlung der Position des Fahrzeugsitzes aus der in Schritt b) erkannten Fahrzeug-Sende/Empfangsvorrichtung und der in Schritt b) erkannten Fahrzeugsitz-Sende/Empfangsvorrichtung (11).

Ein erfindungsgemäßes Verfahren verwendet eine Positionsbestimmungsvorrichtung gemäß dem ersten Aspekt der Erfindung zum Bestimmen einer Position eines Fahrzeugsitzes im Inneren eines Fahrzeugs. Dementsprechend bringt ein erfindungsgemäßes Verfahren die gleichen Vorteile mit sich, wie sie ausführlich mit Bezug auf eine erfindungsgemäße Positionsbestimmungsvorrichtung gemäß dem ersten Aspekt der Erfindung erläutert worden sind.

Die Position des Fahrzeugsitzes ist dabei zwischen zumindest einem ersten und einem zweiten Ort entlang einer Verstellrichtung einstellbar. Insbesondere bei einem ausbaubaren Fahrzeugsitz ist auch eine Orientierung beziehungsweise eine Einbaurichtung des Fahrzeugsitzes, insbesondere in Bezug auf die Verstellrichtung, eine Position des Fahrzeugsitzes im Sinne der Erfindung. In Schritt a) eines erfindungsgemäßen Verfahrens wird zwischen jeder der vorhandenen Fahrzeug-Sende/Empfangsvorrichtungen und der zumindest einen Fahrzeugsitz-Sende/Empfangsvorrichtung eine Übertragung aufgebaut. Dies kann für die einzelnen Fahrzeug-Sende/Empfangsvorrichtungen, insbesondere nacheinander, erfolgen. Die aufgebauten Übertragungen werden dabei je nach Entfernung der jeweiligen Fahrzeug-Sende/Empfangsvorrichtung zur zumindest einen Fahrzeugsitz-Sende/Empfangsvorrichtung eine unterschiedliche Stärke und/oder Qualität aufweisen, wobei selbstverständlich auch die Möglichkeit eingeschlossen ist, dass der Aufbau einer Übertragung scheitert. Weist die Fahrzeugsitzkomponente mehrere Fahrzeugsitz-Sende/Empfangsvorrichtungen auf, kann sich selbstverständlich die Stärke und/oder Qualität der Übertragung auch dann unterscheiden, wenn sie zwischen unterschiedlichen Fahrzeugsitz-Sende/Empfangsvorrichtungen und der gleichen Fahrzeug-Sende/Empfangsvorrichtung aufgebaut wird. In Schritt b) eines erfindungsgemäßen Verfahrens wird daraufhin zumindest diejenige Kombination aus Fahrzeug-Sende/Empfangsvorrichtung und Fahrzeugsitz-Sende/Empfangsvorrichtung erkannt, zwischen denen die beste Übertragung aufgebaut werden konnte. Die beste Übertragung ist dabei gemäß der Erfindung diejenige Übertragung mit der größten Stärke und/oder höchsten Qualität. Da sowohl die Stärke als auch die Qualität der Übertragungen insbesondere von einer Entfernung der jeweiligen Fahrzeug-Sende/Empfangsvorrichtung von der verwendeten Fahrzeugsitz-Sende/Empfangsvorrichtung abhängen und die Positionen dieser Bauteile im Fahrzeug bzw. im Fahrzeugsitz bekannt sind, kann aus diesen Informationen in Schritt c) eines erfindungsgemäßen Verfahrens eine Position, also ein Ort und/oder eine Orientierung, des Fahrzeugsitzes ermittelt werden. Auf diese besonders einfache und kostengünstige Art und Weise kann somit eine Bestimmung einer Position eines Fahrzeugsitzes unter Verwendung lediglich der Sende/Empfangsvorrichtungen vorgenommen werden. Ein Einsatz von zusätzlichen, externen Sensoren kann dadurch vermieden werden, wodurch insbesondere eine Komplexität einer Elektronik, sowohl einer Fahrzeugelektronik als auch einer Fahrzeugsitzelektronik, verringert werden kann.

Besonders bevorzugt kann bei einem erfindungsgemäßen Verfahren ferner vorgesehen sein, dass in einem dem Schritt c) nachgeordneten Schritt d) zwischen der in Schritt b) erkannten Fahrzeug-Sende/Empfangsvorrichtung und der in Schritt b) erkannten Fahrzeugsitz-Sende/Empfangsvorrichtung eine Übertragung von Information und/oder Energie durchgeführt wird. Zwischen der in Schritt b) eines erfindungsgemäßen Verfahrens erkannten Kombination einer Fahrzeug-Sende/Empfangsvorrichtung und einer Fahrzeugsitz-Sende/Empfangsvorrichtung wurde die beste Übertragung und somit die Übertragung mit der größten Stärke und/oder höchsten Qualität ermittelt. Durch die Verwendung dieser Kombination zur Übertragung von Information und/oder Energie kann somit auch im weiteren Betrieb eine besonders gute Übertragung von Information und/oder Energie zwischen der Fahrzeugelektronik und der Fahrzeugsitzelektronik sichergestellt werden.
Darüber hinaus kann ein erfindungsgemäßes Verfahren dahingehend weiterentwickelt sein, dass bei einem Abbruch der in Schritt d) vorgenommenen Übertragung die Schritte a), b) und c) erneut durchgeführt werden. Ein derartiger Abbruch der in Schritt d) vorgenommenen Übertragung kann insbesondere oftmals durch eine Veränderung der Position des Fahrzeugsitzes im Inneren des Fahrzeugs verursacht werden. Durch ein erneutes Ausführen der Schritte a), b) und c) eines erfindungsgemäßen Verfahrens kann, wie oben bereits ausgeführt, eine Position des Fahrzeugsitzes im Inneren des Fahrzeugs besonders einfach und kostengünstig ermittelt werden. Dadurch ist es möglich, auch Veränderungen einer Position des Fahrzeugsitzes besonders einfach, schnell und sicher zu erkennen und die neue Position des Fahrzeugsitzes zu ermitteln.

Auch kann ein erfindungsgemäßes Verfahren derart ausgebildet sein, dass bei einem erfolglosen Durchführen des Schritts b) in Schritt c) ein Ausbau des Fahrzeugsitzes erkannt wird. Ein erfolgloses Durchführen des Schrittes b) bedeutet insbesondere, dass zwischen keiner der Fahrzeug-Sende/Empfangsvorrichtungen und der zumindest einen Fahrzeugsitz-Sende/Empfangs-vorrichtung eine Übertragung von Information und/oder Energie aufgebaut werden konnte. Zusätzlich kann, wenn in der zumindest einen Fahrzeugsitz-Sende/Empfangsvorrichtung ein gedämpftes elektronisches Element verbaut ist, auch auf ein Fehlen einer Energieaufnahme durch die zumindest einen Fahrzeugsitz-Sende/Empfangsvorrichtung geprüft werden. Aus dem erfolglosen Durchführen der Aufbauversuche einer Übertragung in Schritt b) kann insbesondere gefolgert werden, dass die zumindest einen Fahrzeugsitz-Sende/Empfangsvorrichtung für alle Fahrzeug-Sende/Empfangsvorrichtungen zu weit entfernt ist, um eine Übertragung aufbauen zu können. Dies ist insbesondere bei einem Ausbau des Fahrzeugsitzes der Fall. Somit kann durch ein erfindungsgemäßes Verfahren auch ein Ausbau des Fahrzeugsitzes besonders einfach und kostengünstig erkannt werden.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Elemente mit gleicher Funktion und Wirkungsweise sind in den einzelnen Figuren mit denselben Bezugszeichen versehen.

Es zeigen schematisch:
- Fig. 1: ein erfindungsgemäßes Fahrzeug mit einem Fahrzeugsitz in einer ersten Position,
- Fig. 2: ein erfindungsgemäßes Fahrzeug mit einem Fahrzeugsitz in einer zweiten Position,
- Fig. 3: eine Ausgestaltungsform eines Fahrzeugsitzes mit zwei Fahrzeugsitz-Sende/Empfangsvorrichtungen,
- Fig. 4: eine weitere Ausgestaltungsform eines Fahrzeugsitzes mit zwei Fahrzeugsitz-Sende/Empfangsvorrichtungen,
- Fig. 5: eine weitere Ausgestaltungsform eines Fahrzeugsitzes mit zwei Fahrzeugsitz-Sende/Empfangsvorrichtungen, und
- Fig. 6: eine weitere Ausgestaltungsform einer Fahrzeugsitz-Sende/Empfangsvorrichtung.

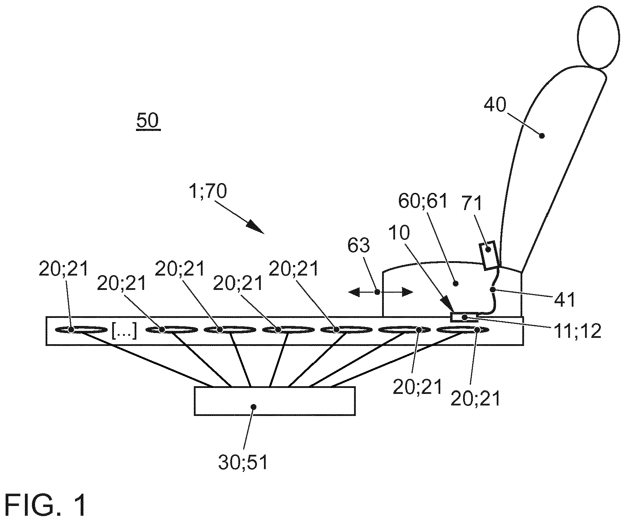

Fig. 1 zeigt das Innere eines erfindungsgemäßen Fahrzeugs 50 in einer möglichen Ausgestaltungsform, in dem ein Fahrzeugsitz 40 angeordnet ist. Der Fahrzeugsitz 40 ist entlang einer Verstellrichtung 63 verstellbar und befindet sich in der abgebildeten Position 60 an einem ersten Ort 61. Das erfindungsgemäße Fahrzeug 50 weist ferner ein erfindungsgemäßes System 70 mit einer erfindungsgemäßen Positionsbestimmungsvorrichtung 1 auf. Eine Fahrzeugsitzkomponente 10 der Positionsbestimmungsvorrichtung 1, die ortsfest im Fahrzeugsitz 40 angeordnet und Teil einer Fahrzeugsitzelektronik 41 ist, weist eine Fahrzeugsitz-Sende/Empfangsvorrichtung 11 auf. Als Gegenstücke dazu weist eine Fahrzeugkomponente 20 der Positionsbestimmungsvorrichtung 1, die ortsfest im Fahrzeug 50 angeordnet und Teil einer Fahrzeugsitzelektronik 51 ist, mehrere Fahrzeug-Sende/Empfangsvorrichtungen 21 auf. Jede dieser Fahrzeug-Sende/Empfangsvorrichtungen 21 ist dabei zusammen mit der Fahrzeugsitz-Sende/Empfangsvorrichtung 11 zum kontaktlosen Übertragen von Information und/oder Energie ausgebildet. Die Fahrzeug-Sende/Empfangsvorrichtungen 21 sind ferner mit einer Auswerteeinheit 30 verbunden, die ebenfalls als Teil der Fahrzeugelektronik 51 ausgebildet ist. Um eine Position 60 des Fahrzeugsitzes 40 zu bestimmen, wird von jeder der Fahrzeug-Sende/Empfangsvorrichtungen 21 eine Übertragung zur Fahrzeugsitz-Sende/Empfangsvorrichtung 11 aufgebaut. Die Stärke und/oder Qualität dieser Übertragungen ist dabei insbesondere von einer Entfernung der jeweiligen Fahrzeug-Sende/Empfangsvorrichtung 21 und der Fahrzeugsitz-Sende/Empfangsvorrichtung 11 abhängig. Durch eine Auswertung der einzelnen Übertragungen, in der dargestellten Ausgestaltungsform durchgeführt in der Auswerteeinheit 30, kann somit diejenige Fahrzeug-Sende/Empfangsvorrichtung 21 ermittelt werden, durch die die beste Übertragung mit der Fahrzeugsitz-Sende/Empfangsvorrichtung 11 aufgebaut werden kann. Da die Anordnungsorte der Fahrzeug-Sende/Empfangsvorrichtungen 21 und der Fahrzeugsitz-Sende/Empfangsvorrichtung 11 bekannt sind, kann dadurch auch eine Position 60 des Fahrzeugsitzes 40 besonders einfach und kostengünstig, insbesondere ohne Verwendung von zusätzlichen Sensoren, vorgenommen werden.

Ferner ist in Fig. 1 eine Verarbeitungsvorrichtung 71 gezeigt, die zusammen mit der Positionsbestimmungsvorrichtung 1 Teil eines erfindungsgemäßen Systems 70 ist. Die Verarbeitungsvorrichtung 71 ist dabei in der abgebildeten Ausgestaltungsform ein Sicherheitssystem, insbesondere, wie abgebildet, beispielsweise ein Gurtkraftbegrenzer. Durch ein erfindungsgemäßes System 70 kann es insbesondere ermöglicht werden, die durch die Positionsbestimmungsvorrichtung 1 ermittelte Position 60 des Fahrzeugsitzes 40 zu verwenden. So kann beispielsweise durch eine als Sicherheitssystem ausgebildete Verarbeitungsvorrichtung 71 eine Gurtkraft entsprechend einer Position 60 des Fahrzeugsitzes 40 begrenzt werden. Dadurch kann beispielsweise eine Größe eines Benutzers des Fahrzeugsitzes 40, die zumeist mit der eingestellten Position 60 des Fahrzeugsitzes 40 korreliert ist, berücksichtigt werden. Auch weitere Sicherheitssysteme, wie beispielsweise Airbags oder ähnliches, können durch eine Verwendung als Verarbeitungsvorrichtung 71 angepasster und damit noch wirkungsvoller eingesetzt werden. In alternativen oder zusätzlichen Ausgestaltungsformen kann eine derartige Verarbeitungsvorrichtung 71 auch andere beziehungsweise weitere Elemente aufweisen, beispielsweise eine Sitzbelegungsmatte und/oder ähnliche Sensorelemente. Eine Auswertung der Sensorinformationen kann dabei direkt im System 70, aber auch, nach einer Übertragung der Information über die Fahrzeugsitz-Sende/Empfangsvorrichtung 11 an die Fahrzeug-Sende/Empfangsvorrichtung 21, in der Auswerteeinheit 30 erfolgen.

Des Weiteren weist die Fahrzeugsitz-Sende/Empfangsvorrichtung 11 in der abgebildeten Ausgestaltungsform ein gedämpftes elektronisches Element 12 auf. Durch ein derartiges gedämpftes elektronisches Element 12, das beispielsweise ein gedämpfter elektronischer Schwingkreis sein kann, wird vom Fahrzeugsitz-Sende/Empfangsvorrichtung 11 bei einem Aufbauversuch einer Übertragung durch ein Fahrzeug-Sende/Empfangsvorrichtung 21 auch dann Energie aufgenommen, wenn das Fahrzeugsitz-Sende/Empfangsvorrichtung 11 defekt ist. Ein Aufbau einer Übertragung zwischen einer der Fahrzeug-Sende/Empfangsvorrichtungen 21 und der Fahrzeugsitz-Sende/Empfangsvorrichtung 11 kommt jedoch nicht zustande. Somit kann insbesondere auch ein Defekt der Fahrzeugsitzkomponente 10, insbesondere der Fahrzeugsitz-Sende/Empfangsvorrichtung 11, detektiert werden. In dem Fall, dass keine der Fahrzeug-Sende/Empfangsvorrichtungen 21 mit der Fahrzeugsitz-Sende/Empfangsvorrichtung 11 eine Übertragung aufbauen kann und keine Energie aufgenommen wird, kann von einem Ausbau des Fahrzeugsitzes 40 geschlossen werden.

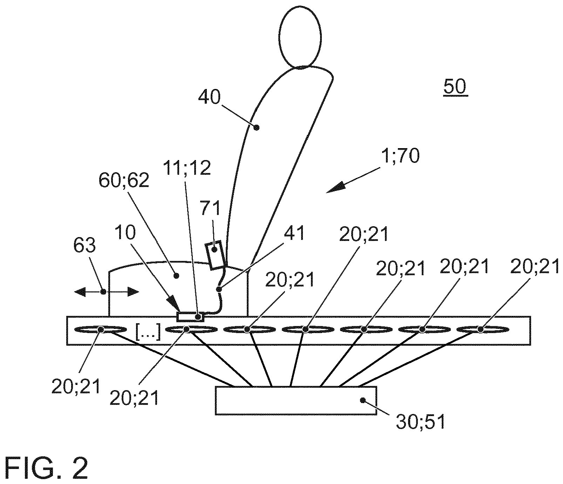

In Fig. 2 ist die in Fig. 1 bereits gezeigte Ausgestaltungsform des Inneren eines erfindungsgemäßen Fahrzeugs 50 nochmals abgebildet, wobei sich jetzt die Position 60 des Fahrzeugsitzes 40 in einen zweiten Ort 62 geändert hat. Sämtliche Merkmale und Vorteile, die in Bezug auf Fig. 1 beschrieben worden sind, sind somit selbstverständlich auch in Bezug auf die in Fig. 2 abgebildeten Gegenstände anwendbar. Deutlich sichtbar ist, dass nun im Vergleich zu Fig. 1 eine andere der Fahrzeug-Sende/Empfangsvorrichtungen 21 die zur Fahrzeugsitz-Sende/Empfangsvorrichtung 11 nächste Sende/Empfangsvorrichtung bildet. Da, wie oben zu Fig. 1 beschrieben, eine Stärke und/oder Qualität der aufgebauten Übertragung zwischen der jeweiligen Fahrzeug-Sende/Empfangsvorrichtung 21 und der Fahrzeugsitz-Sende/Empfangsvorrichtung 11 von deren Entfernung zueinander abhängt, wird besonders deutlich, dass durch das Bestimmen der Fahrzeug-Sende/Empfangsvorrichtung 21 mit der besten Übertragung eine Position 60 des Fahrzeugsitzes 40, insbesondere lediglich unter Verwendung der Sende/Empfangsvorrichtungen 11, 21, möglich ist. Da dadurch insbesondere auf zusätzliche Sensoren verzichtet werden kann, stellt dies eine besonders einfache und kostengünstige Art und Weise einer Positionsbestimmung dar.

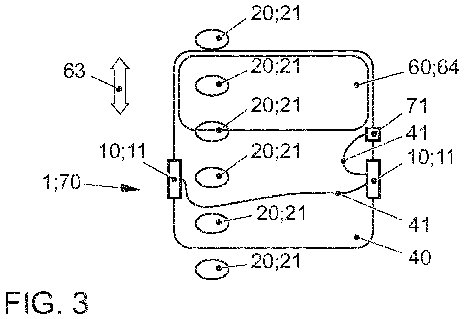

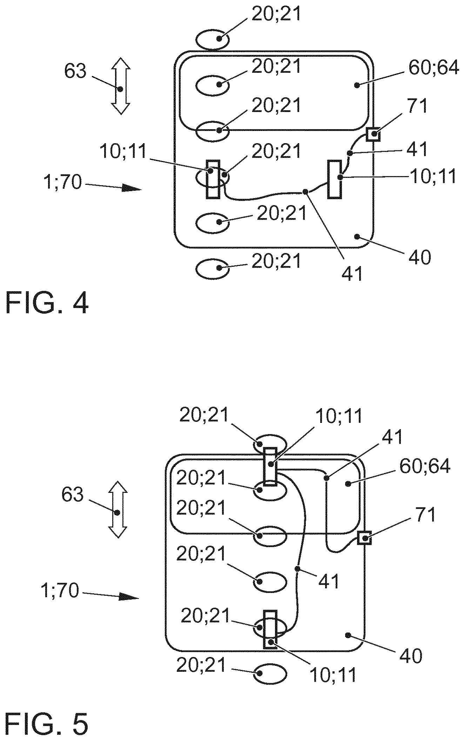

In den Fig. 3, 4 und 5 ist jeweils schematisch ein System 70 mit einer Positionsbestimmungsvorrichtung 1 gezeigt, bei dem die Fahrzeugsitzkomponente 10 jeweils zwei Fahrzeugsitz-Sende-Empfangsvorrichtungen 11 aufweist. Ferner sind auch die Fahrzeug-Sende-Empfangsvorrichtungen 21 der Fahrzeugkomponente 20 gezeigt, die entlang einer Verstellrichtung 63 versetzt angeordnet sind. Zur besseren Sichtbarkeit ist der Fahrzeugsitz 40 nur schematisch und insbesondere transparent dargestellt. Durch das Vorhandensein von zwei Fahrzeugsitz-Sende-Empfangsvorrichtungen 11 kann es besonders einfach ermöglicht werden, als Position 60 eine Orientierung 64 beziehungsweise eine Einbaurichtung des Fahrzeugsitzes 40 bezüglich der Verstellrichtung 63 zu bestimmen, in einer Auswerteeinheit 30 (nicht mit abgebildet) auszuwerten und einer Verarbeitungsvorrichtung 71, die in den abgebildeten Ausgestaltungsformen als ein Gurtschloss ausgebildet ist, zuzuleiten. Die beiden in den Fig. 3 und 4 beispielhaft gezeigten Ausgestaltungsmöglichkeiten unterscheiden sich dabei im Wesentlichen durch die unterschiedliche Anordnung der Fahrzeug-Sende-Empfangsvorrichtungen 21 und insbesondere der Fahrzeugsitz-Sende-Empfangsvorrichtungen 11. Im Folgenden wird auf die Bestimmung einer Orientierung 64 des Fahrzeugsitzes 40 eingegangen, wobei selbstverständlich eine Bestimmung eines Ortes 61, 62 (nicht mit abgebildet) des Fahrzeugsitzes 40 ebenfalls, beispielsweise wie oben bereits beschrieben, möglich ist.
So sind in Fig. 3 die Fahrzeugsitz-Sende-Empfangsvorrichtungen 11 bezüglich der Verstellrichtung 63 an verschiedenen Seiten des Fahrzeugsitzes 40 angeordnet. Zusammen mit der Anordnung der Fahrzeug-Sende-Empfangsvorrichtungen 21, die zwar parallel zur Verstellrichtung 63 aber nicht mittig unterhalb des Fahrzeugsitzes 40 angeordnet sind, ergibt sich somit für eine der beiden Fahrzeugsitz-Sende-Empfangsvorrichtungen 11 automatisch zu jeder der Fahrzeug-Sende-Empfangsvorrichtungen 21 ein kürzerer Abstand als für die andere der beiden Fahrzeugsitz-Sende-Empfangsvorrichtungen 11. Da zum einen dieser Abstand eine Stärke und/oder Qualität der Übertragung deutlich beeinflusst, insbesondere da mit zunehmendem Abstand Stärke und/oder Qualität der Übertragung abnimmt, und zum anderen die Anordnungsorte der einzelnen Sende-Empfangsvorrichtungen 11, 21 bekannt sind, kann besonders einfach ermittelt werden, welche der beiden Fahrzeugsitz-Sende-Empfangsvorrichtungen 11 nahe an den Fahrzeug-Sende-Empfangsvorrichtungen 21 angeordnet ist. Dadurch kann eine Bestimmung der Orientierung 64 beziehungsweise der Einbaurichtung des Fahrzeugsitzes 40 besonders einfach ermöglicht werden.

Alternativ zu der in Fig. 3 gezeigten Ausgestaltungsform können die beiden Fahrzeugsitz-Sende-Empfangsvorrichtungen 11 bevorzugt derart im Fahrzeugsitz 40 auch derart angeordnet sein, dass sich bei einem eingebauten Fahrzeugsitz 40 eine der Sende-Empfangsvorrichtungen 11 direkt oberhalb der entlang der Verstellrichtung 63 angeordneten Fahrzeug-Sende-Empfangsvorrichtungen 21 befindet. Dies ist in Fig. 4 gezeigt. Auf diese Weise kann ein Abstand zwischen der Fahrzeugsitz-Sende-Empfangsvorrichtung 11 und der nächstliegenden Fahrzeug-Sende-Empfangsvorrichtung 21 minimiert werden. Dadurch kann eine besonders gute und sichere Übertragung von Information und/oder Energie zwischen dieser Fahrzeugsitz-Sende-Empfangsvorrichtung 11 und der nächstliegenden Fahrzeug-Sende-Empfangsvorrichtung 21 ermöglicht werden. Die übrigen Elemente der in Fig. 4 abgebildeten Ausgestaltungform einer erfindungsgemäßen Positionsbestimmungsvorrichtung 1 sind dabei wie in der in Fig. 3 abgebildeten Ausgestaltungsform ausgebildet, so dass bezüglich dieser Elemente auf die Beschreibung zu Fig. 3 verwiesen wird.

Eine weitere alternative Ausgestaltungsform eines erfindungsgemäßen Systems 70 ist in Fig. 5 gezeigt. Hier sind sowohl die Fahrzeug-Sende-Empfangsvorrichtungen 21 als auch die Fahrzeugsitz-Sende-Empfangsvorrichtungen 11 parallel zur Verstellrichtung 63 und mittig zum beziehungsweise im Fahrzeugsitz 40 angeordnet. In dieser Ausgestaltungsform wird bei einer festen Position 60 des Fahrzeugsitzes 40 jede der beiden Fahrzeugsitz-Sende-Empfangsvorrichtungen 11 eine beste Übertragung zu einer anderen Fahrzeug-Sende-Empfangsvorrichtungen 21 aufbauen können. Da auch hier die Anordnungsorte der einzelnen Sende-Empfangsvorrichtungen 11, 21 bekannt sind, kann ebenfalls besonders einfach ermittelt werden, in welcher Orientierung 64 der Fahrzeugsitz 40 im Fahrzeug 50 angeordnet ist.

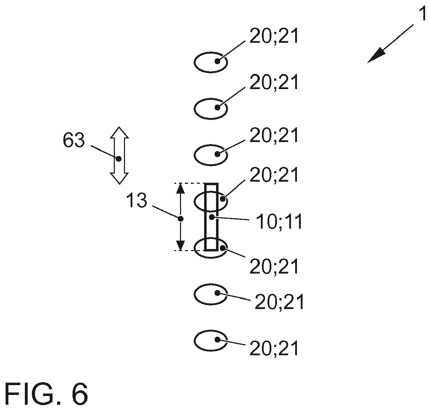

Fig. 6 zeigt schematisch eine mögliche Ausgestaltungsform einer Fahrzeugsitz-Sende-Empfangsvorrichtung 11 der Fahrzeugsitzkomponente 10 einer erfindungsgemäßen Positionsbestimmungsvorrichtung 1. Dabei sind neben der Fahrzeugsitz-Sende-Empfangsvorrichtung 11 auch mehrere Fahrzeug-Sende-Empfangsvorrichtungen 21 der Fahrzeugkomponente 20 abgebildet, die hier insbesondere gleichmäßig entlang einer Verstellrichtung 63 angeordnet sind. Weitere Elemente einer erfindungsgemäßen Positionsbestimmungsvorrichtung 1 sind nicht mit abgebildet. Deutlich zu erkennen ist, dass die Fahrzeugsitz-Sende-Empfangsvorrichtung 11 in Richtung der Verstellrichtung 63 eine derartige Längserstreckung 13 aufweist, dass sie zu jeder Zeit wenigstens zwei der Fahrzeug-Sende-Empfangsvorrichtungen 21 zumindest teilweise überdeckt. Dabei wird die vollständig überdeckte Fahrzeug-Sende-Empfangsvorrichtung 21 zur Übertragung von Information und/oder Energie genutzt. Die teilweise überdeckte Fahrzeug-Sende-Empfangsvorrichtung 21 kann insbesondere bereits darauf vorbereitet werden, bei einer Bewegung des Fahrzeugsitzes 40 (nicht mit abgebildet) in die Richtung der teilweise überdeckten Fahrzeug-Sende-Empfangsvorrichtung 21 diese Übertragungsfunktionalität zu übernehmen. Auch ein Erkennen einer derartigen Bewegung des Fahrzeugsitzes kann durch eine derartige Ausgestaltung einer Fahrzeugsitz-Sende-Empfangsvorrichtung 11 verbessert und erleichtert werden. Eine Verbesserung einer Robustheit der erfindungsgemäßen Positionsbestimmungsvorrichtung 1und insbesondere eine Erhöhung einer Systemgeschwindigkeit, mit der beispielsweise ein Umschalten zwischen den jeweils verwendeten Fahrzeug-Sende-Empfangsvorrichtungen 21 durchgeführt werden kann, kann dadurch bereitgestellt werden.

### Bezugszeichenliste

- 1: Positionsbestimmungsvorrichtung

- 10: Fahrzeugsitzkomponente
- 11: Fahrzeugsitz-Sende/Empfangsvorrichtung
- 12: elektronisches Element
- 13: Längserstreckung

- 20: Fahrzeugkomponente
- 21: Fahrzeug-Sende/Empfangsvorrichtung

- 30: Auswerteeinheit

- 40: Fahrzeugsitz
- 41: Fahrzeugsitzelektronik

- 50: Fahrzeug
- 51: Fahrzeugelektronik

- 60: Position
- 61: erster Ort
- 62: zweiter Ort
- 63: Verstellrichtung
- 64: Orientierung

- 70: System
- 71: Verarbeitungsvorrichtung

## Patentansprüche

1. Positionsbestimmungsvorrichtung (1) zum Bestimmen einer Position (60) eines Fahrzeugsitzes (40) im Inneren eines Fahrzeugs (50), wobei die Position (60) des Fahrzeugsitzes (40) im Fahrzeug (50) entlang einer Verstellrichtung (63) zwischen einem ersten (61) und zumindest einem zweiten Ort (62) einstellbar ist, aufweisend eine Fahrzeugkomponente (20) und eine Fahrzeugsitzkomponente (10), wobei die Fahrzeugkomponente (20) als Teil einer Fahrzeugelektronik (51) ortsfest im Fahrzeug (50) und die Fahrzeugsitzkomponente (10) als Teil einer Fahrzeugsitzelektronik (41) ortsfest im Fahrzeugsitz (40) anordenbar ist, die Fahrzeugsitzkomponente (10) aufweisend zumindest eine Fahrzeugsitz-Sende/Empfangsvorrichtung (11) und die Fahrzeugkomponente (20) aufweisend zumindest zwei Fahrzeug-Sende/Empfangsvorrichtungen (21),
**dadurch gekennzeichnet,**
**dass** zwischen der zumindest einen Fahrzeugsitz-Sende/Empfangsvorrichtung (11) und zumindest einer der Fahrzeug-Sende/Empfangsvorrichtungen (21) ein kontaktloses Übertragen von Information und/oder Energie durchführbar ist und wobei ferner die zumindest zwei Fahrzeug-Sende/Empfangsvorrichtungen (21) versetzt zueinander entlang der Verstellrichtung (63) angeordnet sind.

2. Positionsbestimmungsvorrichtung (1) nach Anspruch 1,
**dadurch gekennzeichnet,**
**dass** die Fahrzeugkomponente (20) und/oder die Fahrzeugsitzkomponente (10) eine Auswerteeinheit (30) zur Bestimmung der Position (60) des Fahrzeugsitzes (40) aufweist.

3. Positionsbestimmungsvorrichtung (1) nach Anspruch 1 oder 2,
**dadurch gekennzeichnet,**
**dass** die Fahrzeug-Sende/Empfangsvorrichtungen (21) identisch oder zumindest im Wesentlichen identisch ausgebildet sind.

4. Positionsbestimmungsvorrichtung (1) nach einem der vorangegangen Ansprüche,
**dadurch gekennzeichnet,**
**dass** eine Anzahl und/oder eine Anordnung der Fahrzeug-Sende/Empfangsvorrichtungen (21) den einstellbaren Positionen (60) des Fahrzeugsitzes (40) anpassbar ist/sind.

5. Positionsbestimmungsvorrichtung (1) nach Anspruch 4,
**dadurch gekennzeichnet,**
**dass** die Anzahl und die Anordnung der Fahrzeug-Sende/Empfangsvorrichtungen (21) einer Anzahl und Orten (61, 62) von fest einstellbaren Positionen (60) des Fahrzeugsitzes (40) anpassbar sind.

6. Positionsbestimmungsvorrichtung (1) nach Anspruch 4,
**dadurch gekennzeichnet,**
**dass** die Fahrzeug-Sende/Empfangsvorrichtungen (21) derart anordenbar sind, dass sie entlang der Verstellrichtung (63) überlappen und dass eine Anzahl der Fahrzeug-Sende/Empfangsvorrichtungen (21) derart wählbar ist, dass für alle möglichen Positionen (60) des Fahrzeugsitzes (40) zwischen zumindest einer der Fahrzeug-Sende/Empfangsvorrichtungen (21) und der zumindest einen Fahrzeugsitz-Sende/Empfangsvorrichtung (11) ein kontaktloses Übertragen von Information und/oder Energie durchführbar ist.

7. Positionsbestimmungsvorrichtung (1) nach einem der vorangegangenen Ansprüche,
**dadurch gekennzeichnet,**
**dass** die zumindest eine Fahrzeugsitz-Sende/Empfangsvorrichtung (11) ein gedämpftes elektronisches Element (12), insbesondere einen gedämpften elektronischen Schwingkreis, aufweist.

8. Positionsbestimmungsvorrichtung (1) nach einem der vorangegangenen Ansprüche,
**dadurch gekennzeichnet,**
**dass** die Fahrzeugsitz-Sende-Empfangsvorrichtung (11) in Richtung der Verstellrichtung (63) eine derartige Längserstreckung (13) aufweist, dass sie wenigstens zwei der Fahrzeug-Sende-Empfangsvorrichtungen (21) zumindest teilweise überdeckt.

9. System (70), aufweisend eine Positionsbestimmungsvorrichtung (1) gemäß einem der vorangegangenen Ansprüche und eine Verarbeitungsvorrichtung (71), die zum Verarbeiten der durch die Positionsbestimmungsvorrichtung (1) bestimmten Position (60) des Fahrzeugsitzes (40) ausgebildet ist.

10. System (70) nach Anspruch 9,
**dadurch gekennzeichnet,**
**dass** die Verarbeitungsvorrichtung (71) ein Sicherheitssystem des Fahrzeugs (50) ist.

11. Fahrzeug (50) mit einem im Inneren des Fahrzeugs (50) angeordneten Fahrzeugsitz (40), wobei eine Position (60) des Fahrzeugsitzes (40) entlang einer Verstellrichtung (63) zwischen einem ersten (61) und zumindest einem zweiten Ort (62) einstellbar ist, aufweisend eine Positionsbestimmungsvorrichtung (1) zum Bestimmen der Position (60) des Fahrzeugsitzes (40) im Inneren eines Fahrzeugs (50),
**dadurch gekennzeichnet,**
**dass** die Positionsbestimmungsvorrichtung (1) gemäß einem der vorangegangenen Ansprüche 1 bis 8 ausgebildet ist und/oder dass das Fahrzeug (50) ein System (70) gemäß einem der vorangegangenen Ansprüche 9 oder 10 aufweist.

12. Verfahren zum Bestimmen einer Position (60) eines Fahrzeugsitzes (40) im Inneren eines Fahrzeugs (50), wobei der Fahrzeugsitz (40) entlang einer Verstellrichtung (63) zwischen einem ersten (61) und zumindest einem zweiten Ort (62) einstellbar ist, unter Verwendung einer Positionsbestimmungsvorrichtung (1) gemäß einem der Anspruche 1 bis 8,
**gekennzeichnet durch folgende Schritte:**
a) Aufbauen einer Übertragung zwischen jeder der zumindest zwei Fahrzeug-Sende/Empfangsvorrichtungen (21) mit der zumindest einen Fahrzeugsitz-Sende/Empfangsvorrichtung (11),
b) Erkennen zumindest der Fahrzeug-Sende/Empfangsvorrichtung (21) und der Fahrzeugsitz-Sende/Empfangsvorrichtung (11) mit der besten Übertragung, und
c) Ermittlung der Position (60) des Fahrzeugsitzes (40) aus der in Schritt b) erkannten Fahrzeug-Sende/Empfangsvorrichtung (21) und der in Schritt b) erkannten Fahrzeugsitz-Sende/Empfangsvorrichtung (11).

13. Verfahren nach Anspruch 12,
**dadurch gekennzeichnet,**
**dass** in einem dem Schritt c) nachgeordneten Schritt d) zwischen der in Schritt b) erkannten Fahrzeug-Sende/Empfangsvorrichtung (21) und der in Schritt b) erkannten Fahrzeugsitz-Sende/Empfangsvorrichtung (11) eine Übertragung von Information und/oder Energie durchgeführt wird.

14. Verfahren nach Anspruch 13,
**dadurch gekennzeichnet,**
**dass** bei einem Abbruch der in Schritt d) vorgenommenen Übertragung die Schritte a), b) und c) erneut durchgeführt werden.

15. Verfahren nach Anspruch 12 bis 14,
**dadurch gekennzeichnet,**
**dass** bei einem erfolglosen Durchführen des Schritts b) in Schritt c) ein Ausbau des Fahrzeugsitzes (40) erkannt wird.

## Claims

1. Position-determining device (1) for determining a position (60) of a vehicle seat (40) inside a vehicle (50), wherein the position (60) of the vehicle seat (40) in the vehicle (50) is adjustable along an adjustment direction (63) between a first location (61) and at least one second location (62), having a vehicle component (20) and a vehicle seat component (10), wherein the vehicle component (20) can be fixedly arranged in the vehicle (50) as part of a vehicle electronic system (51), and the vehicle seat component (10) can be fixedly arranged in the vehicle seat (40) as part of a vehicle seat electronics (41), the vehicle seat component (10) having at least one vehicle seat transmitting/receiving device (11), and the vehicle component (20) having at least two vehicle transmitting/receiving devices (21),
**characterized in that**
a contactless transmission of information and/or energy can be performed between the at least one vehicle seat transmitting/receiving device (11) and at least one of the vehicle transmitting/receiving devices (21), and wherein the at least two vehicle transmitting/receiving devices (21) are furthermore arranged offset relative to one another along the adjustment direction (63).

2. Position-determining device (1) according to Claim 1,
**characterized in that**
the vehicle component (20) and/or the vehicle seat component (10) has an evaluation unit (30) for determining the position (60) of the vehicle seat (40).

3. Position-determining device (1) according to Claim 1 or 2,
**characterized in that**
the vehicle transmitting/receiving devices (21) are of identical or at least substantially identical design.

4. Position-determining device (1) according to any one of the preceding claims,
**characterized in that**
a number and/or an arrangement of the vehicle transmitting/receiving devices (21) can be adapted to the adjustable positions (60) of the vehicle seat (40).

5. Position-determining device (1) according to Claim 4,
**characterized in that**
the number and the arrangement of the vehicle transmitting/receiving devices (21) can be adapted to a number and locations (61, 62) of fixed adjustable positions (60) of the vehicle seat (40).

6. Position-determining device (1) according to Claim 4,
**characterized in that**
the vehicle transmitting/receiving devices (21) can be arranged such that they overlap along the adjustment direction (63), and **in that** a number of the vehicle transmitting/receiving devices (21) can be selected such that, for all possible positions (60) of the vehicle seat (40), a contactless transmission of information and/or energy can be performed between at least one of the vehicle transmitting/receiving devices (21) and the at least one vehicle seat transmitting/receiving device (11).

7. Position-determining device (1) according to any one of the preceding claims,
**characterized in that**
the at least one vehicle seat transmitting/receiving device (11) has a damped electronic element (12), in particular a damped electronic oscillating circuit.

8. Position-determining device (1) according to any one of the preceding claims,
**characterized in that**
the vehicle seat transmitting/receiving device (11) has a longitudinal extent (13) in the direction of the adjustment direction (63) such that it at least partially covers at least two of the vehicle transmitting/receiving devices (21).

9. System (70) having a position-determining device (1) according to any one of the preceding claims and a processing device (71) that is designed to process the position (60) of the vehicle seat (40) determined by the position-determining device (1).

10. System (70) according to Claim 9,
**characterized in that**
the processing device (71) is a safety system of the vehicle (50).

11. Vehicle (50) having a vehicle seat (40) arranged in the inside the vehicle (50), wherein a position (60) of the vehicle seat (40) is adjustable along an adjustment direction (63) between a first (61) and at least one second location (62), having a position-determining device (1) for determining the position (60) of the vehicle seat (40) inside a vehicle (50),
**characterized in that**
the position-determining device (1) is designed according to any one of the preceding Claims 1 to 8, and/or **in that** the vehicle (50) has a system (70) in accordance with one of the preceding Claims 9 or 10.

12. Method for determining a position (60) of a vehicle seat (40) inside a vehicle (50), wherein the vehicle seat (40) is adjustable between a first (61) and at least one second location (62) along an adjustment direction (63) using a position-determining device (1) in accordance with any one of Claims 1 to 8,
**characterized by the following steps:**
a) establishing a transmission between each of the at least two vehicle transmitting/receiving devices (21) to the at least one vehicle seat transmitting/receiving device (11),
b) detecting at least the vehicle transmitting/receiving device (21) and the vehicle seat transmitting/receiving device (11) with the best transmission, and
c) determining the position (60) of the vehicle seat (40) from the vehicle transmitting/receiving device (21) detected in step (b) and the vehicle seat transmitting/receiving device (11) detected in step (b).

13. Method according to Claim 12,
**characterized in that**
in a step d) following step c), a transmission of information and/or energy is performed between the vehicle transmitting/receiving device (21) detected in step b) and the vehicle seat transmitting/receiving device (11) detected in step b).

14. Method according to Claim 13,
**characterized in that**
steps a), b) and c) are carried out again if the transmission performed in step d) is interrupted.

15. Method according to Claims 12 to 14,
**characterized in that**
if step b) is carried out unsuccessfully, a removal of the vehicle seat (40) is detected in step c).

## Revendications

1. Dispositif de détermination de position (1) servant à déterminer une position (60) d'un siège de véhicule (40) dans l'habitacle d'un véhicule (50), la position (60) du siège de véhicule (40) dans le véhicule (50) pouvant être réglée dans une direction de déplacement (63) entre un premier (61) et au moins un deuxième emplacement (62), présentant un composant de véhicule (20) et un composant de siège de véhicule (10), le composant de véhicule (20) pouvant être agencé à demeure dans le véhicule (50) en tant que partie d'un système électronique de véhicule (51) et le composant de siège de véhicule (10) pouvant être agencé à demeure dans le siège de véhicule (40) en tant que partie d'un système électronique de siège de véhicule (41), le composant de siège de véhicule (10) présentant au moins un dispositif d'émission/réception (11) de siège de véhicule et le composant de véhicule (20) présentant au moins deux dispositifs d'émission/réception (21) de véhicule,
**caractérisé en ce**
**qu'**une transmission sans contact d'informations et/ou d'énergie peut être réalisée entre l'au moins un dispositif d'émission/réception (11) de siège de véhicule et au moins un des dispositifs d'émission/réception (21) de véhicule et, en outre, les au moins deux dispositifs d'émission/réception (21) de véhicule étant agencés décalés l'un par rapport à l'autre le long de la direction de déplacement (63).

2. Dispositif de détermination de position (1) selon la revendication 1,
**caractérisé en ce**
**que** le composant de véhicule (20) et/ou le composant de siège de véhicule (10) présente une unité d'évaluation (30) pour déterminer la position (60) du siège de véhicule (40).

3. Dispositif de détermination de position (1) selon la revendication 1 ou 2,
**caractérisé en ce**
**que** les dispositifs d'émission/réception (21) de véhicule sont conçus de manière identique ou au moins essentiellement identique.

4. Dispositif de détermination de position (1) selon l'une quelconque des revendications précédentes,
**caractérisé en ce**
**qu'**un nombre et/ou un agencement des dispositifs d'émission/réception (21) de véhicule peut/peuvent être adapté(s) aux positions réglables (60) du siège de véhicule (40).

5. Dispositif de détermination de position (1) selon la revendication 4,
**caractérisé en ce**
**que** le nombre et l'agencement des dispositifs d'émission/réception (21) de véhicule peuvent être adaptés à un nombre et des emplacements (61, 62) de positions réglables fixes (60) du siège de véhicule (40).

6. Dispositif de détermination de position (1) selon la revendication 4,
**caractérisé en ce**
**que** les dispositifs d'émission/réception (21) de véhicule sont agencés de manière à se chevaucher le long de la direction de déplacement (63) et qu'un nombre des dispositifs d'émission/réception (21) de véhicule peut être sélectionné de manière à permettre la réalisation, pour toutes les positions possibles (60) du siège de véhicule (40), d'une transmission sans contact d'informations et/ou d'énergie entre au moins un des dispositifs d'émission/réception (21) de véhicule et l'au moins un dispositif d'émission/réception (11) de siège de véhicule.

7. Dispositif de détermination de position (1) selon l'une quelconque des revendications précédentes,
**caractérisé en ce**
**que** l'au moins un dispositif d'émission/réception (11) de siège de véhicule présente un élément électronique atténué (12), en particulier un circuit oscillant électronique atténué.

8. Dispositif de détermination de position (1) selon l'une quelconque des revendications précédentes,
**caractérisé en ce**
**que** le dispositif d'émission/réception (11) de siège de véhicule présente, dans le sens de la direction de déplacement (63), une extension longitudinale (13) telle qu'elle recouvre au moins partiellement au moins deux des dispositifs d'émission/réception (21) de véhicule.

9. Système (70), présentant un dispositif de détermination de position (1) selon l'une quelconque des revendications précédentes et un dispositif de traitement (71), qui est conçu pour le traitement de la position (60) du siège de véhicule (40) déterminée par le dispositif de détermination de position (1).

10. Système (70) selon la revendication 9,
**caractérisé en ce**
**que** le dispositif de traitement (71) est un système de sécurité du véhicule (50).

11. Véhicule (50) comprenant un siège de véhicule (40) agencé dans l'habitacle du véhicule (50), une position (60) du siège de véhicule (40) étant réglable le long d'une direction de déplacement (63) entre un premier (61) et au moins un deuxième emplacement (62), présentant un dispositif de détermination de position (1) servant à déterminer la position (60) du siège de véhicule (40) dans l'habitacle d'un véhicule (50),
**caractérisé en ce**
**que** le dispositif de détermination de position (1) est conçu selon l'une quelconque des revendications 1 à 8 précédentes et/ou que le véhicule (50) présente un système (70) selon l'une quelconque des revendications 9 ou 10 précédentes.

12. Procédé de détermination d'une position (60) d'un siège de véhicule (40) dans l'habitacle d'un véhicule (50), le siège de véhicule (40) étant réglable le long d'une direction de déplacement (63) en un premier (61) et au moins un deuxième emplacement (62), en utilisant un dispositif de détermination de position (1) selon l'une quelconque des revendications 1 à 8,
**caractérisé par les étapes suivantes** :
a) mise en place d'une transmission entre chacun des au moins deux dispositifs d'émission/réception (21) de véhicule et l'au moins un dispositif d'émission/réception (11) de siège de véhicule,
b) reconnaissance au moins du dispositif d'émission/réception (21) de véhicule et du dispositif d'émission/réception (11) de siège de véhicule présentant la meilleure transmission, et
c) détermination de la position (60) du siège de véhicule (40) à partir du dispositif d'émission/réception (21) de véhicule reconnu dans l'étape b) et du dispositif d'émission/réception (11) de siège de véhicule reconnu dans l'étape b).

13. Procédé selon la revendication 12,
**caractérisé en ce**
**que** dans une étape d) ultérieure à l'étape c), une transmission d'informations et/ou d'énergie est réalisée entre le dispositif d'émission/réception (21) de véhicule reconnu dans l'étape b) et le dispositif d'émission/réception (11) de siège de véhicule reconnu dans l'étape b).

14. Procédé selon la revendication 13,
**caractérisé en ce**
**que** lors d'une interruption de la transmission réalisée dans l'étape d), les étapes a), b) et c) sont réalisées de nouveau.

15. Procédé selon les revendications 12 à 14,
**caractérisé en ce**
**que** lorsque l'étape b) n'a pas pu être effectuée, une dépose du siège de véhicule (40) est reconnue dans l'étape c).
